# FASCICULE DE BREVET EUROPEEN

(11) **EP 0 659 784 B1**
(45) Date de publication et mention de la délivrance du brevet: **22.09.1999**
(21) Numéro de dépôt: 94203728.4
(22) Date de dépôt: 22.12.1994
(51) Int. Cl.: C08F 255/00, C08F 255/02, C08L 51/06, B29C 47/38, C08J 3/12, C08F 6/26

(54) **Procédé continu de greffage d'une polyoléfine, les polyoléfines greffées obtenues au moyen de ce procédé**
Kontinuierliches Verfahren zur Pfropfung von Polyolefin, und hergestellte Pfropfpolyolefine
Continuous process of grafting a polyolefin, and the graft polyolefins obtained by this process

(30) Priorité: 27.12.1993 BE 9301469
(43) Date de publication de la demande: 28.06.1995
(60) Demande divisionnaire: 99103519.7
(73) Titulaire: SOLVAY POLYOLEFINS EUROPE - BELGIUM (Société Anonyme), 1050 Bruxelles (BE)
(72) Inventeur: Vandevijver, Eric, B-1200 Bruxelles (BE); Lefevre, Pascal, B-9280 Lebbeke (BE); Fassiau, Eric, B-7000 Mons (BE); Vogels, Claude, B-1380 Lasne (BE)
(74) Mandataire: Destryker, Elise Martine

(56) Documents cités:
- EP-A- 0 202 921
- EP-A- 0 268 985
- EP-A- 0 286 734
- EP-A- 0 370 736
- EP-A- 0 421 932
- EP-A- 0 581 360
- WO-A-90/01504
- FR-A- 2 301 558
- CHEMICAL ABSTRACTS, vol. 105, no. 9, 1 Novembre 1986 Columbus, Ohio, US; abstract no. 154162c, HAMADA YOSHINORI ET AL. 'propylene polymer compositions' page 45; colonne 1;
- PATENT ABSTRACTS OF JAPAN vol. 11 no. 185 (C-428) ,13 Juin 1987 & JP-A-62 011703 (UBE IND. LTD.) 20 Janvier 1987,
- DATABASE WPI Section Ch, Week 9306 Derwent Publications Ltd., London, GB; Class A17, AN 93-050149 TAKAHASHI SUSUMU ET AL. 'insulating wire prepn.' & JP-A-05 002 919 (FUJIKURA LTD) , 8 Janvier 1993
- CHEMICAL ABSTRACTS, vol. 95, no. 26, Décembre 1981 Columbus, Ohio, US; abstract no. 220790j, page 36; colonne 2; & JP-A-81 118 411 (MITSUBISHI PETROCHEMICAL CO. LTD.) 17 Septembre 1981

## Description

La présente invention concerne un procédé continu de greffage d'une polyoléfine par extrusion réactive d'un mélange d'une polyoléfine fondue, un monomère fonctionnel greffable et un générateur de radicaux, en particulier un procédé continu de greffage d'une polyoléfine d'oléfine linéaire. Elle concerne également les polyoléfines greffées stabilisées ainsi obtenues.

Il est bien connu de modifier des propriétés d'une polyoléfine par greffage de la polyoléfine en fondu dans une extrudeuse, technique généralement appelée "greffage par extrusion réactive", tel que décrit notamment dans l'exemple 1 du brevet US 4927888. Dans ce procédé connu on alimente une extrudeuse en polyéthylène et ensuite en un mélange d'anhydride maléique (monomère greffable), de méthyl éthyl cétone (solvant) et de 2,5-diméthyl-2,5-di(t-butylperoxy)-hexyne-3 (générateur de radicaux) et on recueille, à la sortie de l'extrudeuse, un polyéthylène greffé à l'anhydride maléique.

Ce procédé connu présente l'inconvénient de produire une polyoléfine greffée de faible stabilité thermique à l'oxygène.

Dans le brevet US 3884451, on décrit un procédé d'extrusion utilisable pour mélanger des peintures. Dans ce brevet, on propose également, en toute généralité, d'utiliser ce procédé d'extrusion pour ajouter à des matériaux caoutchouteux ou thermoplastiques des inhibiteurs d'oxydation, séparément ou simultanément dans l'extrudeuse.

Dans le brevet US 5216061 on a proposé un procédé pour la fabrication de mélanges à base de polyoléfines d'alpha-oléfines supérieures branchées ayant un point de fusion supérieur à 180 °C greffées, de préférence du polyméthylpentène greffé, contenant en outre un composé thio-aliphatique et des fibres de verre. Selon ce procédé, on mélange le polyméthylpentène avec un stabilisant du type phénol encombré, on mélange ensuite à sec et à température ambiante le polyméthylpentène ainsi stabilisé avec un peroxyde (générateur de radicaux) et un monomère greffable (silane), on introduit le mélange ainsi obtenu dans une extrudeuse, on alimente l'extrudeuse, après la réaction de greffage, à un endroit situé à mi-chemin entre l'introduction du mélange (comprenant le polyméthylpentène, le phénol encombré, le peroxyde et le monomère greffable) et la décharge de l'extrudeuse en un additif thio-aliphatique et en fibres de verre, et on granule le mélange ainsi obtenu à la sortie de l'extrudeuse.

On a constaté que le greffage d'une polyoléfine de monomères linéaires par extrusion réactive induit des problèmes de stabilité thermique.

Dans la demande de brevet EP-A-0286734, on décrit l'ajout d'un additif anti-oxydant à un mélange comprenant du polyéthylène, les monomères fonctionnels greffables et le générateur de radicaux avant extrusion du mélange.

Dans le document Chemical Abstracts n° 105 : 154162c, l'additif anti-oxydant est mélangé avec la polyoléfine, le monomère fonctionnel et le générateur de radicaux avant la granulation et l'injection.

Dans les documents JP 62/011703 et JP 50/02919, l'additif anti-oxydant est déjà présent dans la polyoléfine avant son greffage.

Enfin, dans la demande de brevet antérieure EP-A-0581360, non prépubliée, l'additif anti-oxydant est ajouté sous la forme d'une solution dans l'hexane.

L'introduction simultanée d'un additif anti-oxydant avec les autres réactifs (polyoléfine, monomère greffable et générateur de radicaux) s'est révélée inefficace d'une part pour conférer une stabilité thermique suffisante à la polyoléfine greffée et d'autre part pour obtenir un taux de greffage élevé.

La présente invention vise à remédier aux inconvénients précités en fournissant un procédé nouveau et simple qui permette, en une seule étape, d'obtenir une polyoléfine d'oléfine linéaire greffée et stabilisée, présentant à la fois un taux de greffage élevé et une stabilité thermique élevée. Un autre objectif de l'invention est de modifier les propriétés des polyoléfines d'oléfines linéaires par greffage afin d'améliorer leurs performances en tant qu'adhésif ou agent de compatibilisation.

La demanderesse a observé que le choix de la zone dans laquelle est introduit un additif anti-oxydant est prépondérant pour obtenir une polyoléfine d'oléfine linéaire greffée de stabilité thermique accrue.

En conséquence, l'invention concerne un procédé continu de greffage d'une polyoléfine au sein d'une masse fondue comprenant une polyoléfine d'oléfine linéaire contenant de 2 à 8 atomes de carbone, un monomère fonctionnel greffable et un générateur de radicaux, dans une extrudeuse comprenant à sa sortie une zone de compression précédant une zone d'évacuation, caractérisé en ce qu'on introduit au moins un additif anti-oxydant, à l'exception d'un additif anti-oxydant en solution dans l'hexane, dans une étape d'alimentation différée et distincte, au moment où le monomère fonctionnel greffable et le générateur de radicaux sont déjà introduits et présents au sein de la masse fondue et au plus tard avant l'entrée de celle-ci dans la zone de compression de l'extrudeuse.

Par extrudeuse, on entend désigner aux fins de la présente invention tout dispositif continu comprenant une zone d'alimentation et à sa sortie une zone d'évacuation précédée d'une zone de compression, cette dernière forçant la masse fondue à passer au travers de la zone d'évacuation.

Le procédé selon l'invention a notamment pour but de modifier les propriétés de la polyoléfine par greffage dans une extrudeuse. Celle-ci comprend en général notamment les parties suivantes :
(1) une trémie d'alimentation principale à l'entrée de l'extrudeuse,
(2) éventuellement un ou plusieurs dispositifs d'alimentation différée qui permettent d'introduire séparément la polyoléfine, le monomère et le générateur,
(3) un ou plusieurs éléments de vis permettant la propagation de la matière à extruder,
(4) éventuellement un ou plusieurs éléments malaxeurs permettant le mélange de la matière à extruder, les éléments de vis et les éléments malaxeurs pouvant éventuellement s'alterner,
(5) une ou plusieurs zones d'échauffement permettant la fusion de la polyoléfine pour que la réaction de greffage ait lieu essentiellement en fondu,
(6) une zone de dégazage afin d'éliminer les quantités excessives de monomère et de générateur n'ayant pas réagi, et éventuellement des sous-produits générés lors de l'extrusion,
(7) à la sortie, une zone de compresssion suivie d'une zone d'évacuation, la zone de compression ayant pour fonction de compresser la matière à extruder afin de la forcer au travers de la zone d'évacuation de l'extrudeuse,
(8) un dispositif d'alimentation différée disposé à un endroit situé après l'introduction du monomère greffable et du générateur de radicaux, où la masse comprenant la polyoléfine, le monomère et le générateur est déjà fondue, et avant que la matière à extruder n'entre dans la zone de compression (7) precitée.

Les parties (1) à (7) ne sont pas nécessairement disposées dans cet ordre.

La zone d'évacuation de l'extrudeuse peut être suivie d'un dispositif de granulation ou d'un dispositif donnant à la matière extrudée une forme profilée telle qu'un film ou un tuyau. Le plus souvent, la zone d'évacuation de l'extrudeuse est suivie d'un dispositif de granulation.

A cette fin on peut utiliser toute extrudeuse connue pourvu qu'elle permette l'introduction différée de l'additif anti-oxydant telle que décrite au point (8) ci-avant.

Les extrudeuses pouvant convenir dans le procédé selon l'invention sont notamment les extrudeuses du type monovis, les extrudeuses du type co-malaxeur telles que par exemple les extrudeuses commercialisées par la société BUSS, les extrudeuses du type bi-vis co-rotatives interpénétrées ou non interpénétrées, les extrudeuses du type bi-vis contra-rotatives interpénétrées ou non interpénétrées, et les extrudeuses du type multi-vis. On utilise de préférence une extrudeuse du type co-malaxeur ou du type bi-vis co-rotatives interpénétrées.

Dans le procédé selon l'invention on introduit dans l'extrudeuse la polyoléfine, le monomère fonctionnel greffable et le générateur de radicaux. Ces trois réactifs peuvent être introduits simultanément, éventuellement en les mélangeant au préalable, de préférence à sec et à température ambiante, par exemple dans un mélangeur mécanique. Ces trois réactifs peuvent également être introduits séparément dans un ordre quelconque, par exemple en introduisant d'abord la polyoléfine et ensuite simultanément le monomère et le générateur, le monomère et le générateur étant éventuellement mélangés au préalable. On peut aussi introduire d'abord la polyoléfine et le monomère, éventuellement après les avoir mélangés au préalable, et ensuite y ajouter le générateur. On peut également introduire les trois réactifs en trois étapes successives, par exemple d'abord la polyoléfine, puis le monomère et ensuite le générateur. Il peut s'avérer avantageux d'introduire le monomère et le générateur (séparément ou simultanément) après la fusion de la polyoléfine afin d'optimiser l'homogénéisation du mélange.

Dans une forme de réalisation avantageuse du procédé selon l'invention, on additionne une petite quantité d'agent stabilisant, appelé ci-après "agent préstabilisant", à la polyoléfine avant ou au moment de l'introduction de celle-ci dans l'extrudeuse et donc avant l'introduction de l'additif anti-oxydant. Ceci s'avère particulièrement performant lorsque la polyoléfine mise en oeuvre dans le procédé selon l'invention est une polyoléfine vierge telle que sortant du réacteur de polymérisation sans traitement ultérieur. Dans cette forme de réalisation l'agent préstabilisant a pour fonction de protéger la polyoléfine contre toute dégradation dès l'étape de fusion.

Dans le procédé selon l'invention il est essentiel que l'introduction de l'additif anti-oxydant intervienne en différé, à savoir dans une étape d'alimentation différée et distincte, au moment où le monomère fonctionnel greffable et le générateur de radicaux sont déjà introduits et présents au sein de la masse fondue comprenant la polyoléfine, le monomère greffable et le générateur de radicaux, et avant que la masse ne soit entrée dans la zone de compression précédant la zone d'évacuation de l'extrudeuse. Si l'introduction de l'additif anti-oxydant intervient en même temps ou avant l'introduction d'un des autres réactifs, ou encore avant la fusion de la masse, ou encore en même temps ou après l'entrée de la masse dans la zone de compression précitée, on n'obtient pas une polyoléfine greffée présentant à la fois un taux de greffage élevé et une stabilité thermique élevée. Par "introduction différée de l'additif anti-oxydant" on entend désigner l'introduction du ou des additifs anti-oxydant en une seule fois ou sous forme d'introduction étagée, dans la masse fondue au plus tard avant l'entrée de celle-ci dans la zone de compression de l'extrudeuse.

Dans un mode de réalisation particulier du procédé selon l'invention, on introduit une première partie de la polyoléfine dans la trémie d'alimentation principale à l'entrée de l'extrudeuse et une seconde partie de la polyoléfine, en différé, simultanément avec l'additif anti-oxydant. Celui-ci est alors avantageusement mélangé au préalable avec la seconde partie de la polyoléfine.

Dans le procédé selon l'invention, le greffage de la polyoléfine au moyen du monomère fonctionnel greffable sous l'effet de radicaux libres produits par le générateur est effectué à une température qui est supérieure aux températures de fusion de la polyoléfine et de la polyoléfine greffée, qui est inférieure aux températures de décomposition de la polyoléfine et de la polyoléfine greffée, et à laquelle le générateur de radicaux produit suffisamment de radicaux libres pour effectuer le greffage. La température dépend dès lors de la nature de la polyoléfine, de la polyoléfine greffée et du générateur de radicaux. La température est en général au moins 100 °C, le plus souvent au moins 130 °C, en particulier au moins 140 °C. Généralement on travaille à une température ne dépassant pas 400 °C, le plus souvent pas 300 °C, et plus particulièrement pas 250 °C.

La durée nécessaire pour effectuer le greffage dans le procédé selon l'invention dépend des quantités mises en oeuvre des réactifs, de la température, de la nature chimique des réactifs (polyoléfine, monomère, générateur), du type d'extrudeuse utilisé car celui-ci détermine l'efficacité de mélange et de contact entre les réactifs, de la vitesse de rotation de la (ou des) vis d'extrudeuse et du débit dans l'extrudeuse. La durée est généralement de 1 seconde à 1 heure, de préférence de 5 secondes à 30 minutes, plus particulièrement de 10 secondes à 10 minutes. Les durées d'au plus 5 minutes suffisent généralement largement pour produire une polyoléfine d'oléfine linéaire greffée avec un taux de greffage élevé qui soit thermiquement stable.

Par polyoléfine, on entend désigner aux fins de la présente invention, une ou plusieurs polyoléfines pouvant éventuellement être additionnées d'un polymère thermoplastique tel que par exemple un polystyrène, un polyamide et un polychlorure de vinyle. On préfère toutefois mettre en oeuvre une seule polyoléfine. De même, par monomère fonctionnel greffable et par générateur de radicaux, on entend désigner un ou plusieurs monomères fonctionnels greffables respectivement un ou plusieurs générateurs de radicaux. Le plus souvent, un seul générateur de radicaux est utilisé. La mise en oeuvre d'un seul monomère fonctionnel greffable est parfois souhaitée.

Les polyoléfines utilisables dans le procédé selon l'invention sont des polymères d'oléfines linéaires contenant de 2 à 8 atomes de carbone telles que l'éthylène, le propylène, le 1-butène, le 1-pentène, le 1-hexène et le 1-octène. Les oléfines linéaires contiennent de préférence de 2 à 6 atomes de carbone, plus particulièrement de 2 à 4 atomes de carbone.

Les polyoléfines peuvent être sélectionnées parmi les homopolymères des oléfines précitées et parmi les copolymères de ces oléfines, en particulier des copolymères d'éthylène ou de propylène avec un ou plusieurs comonomères. Les comonomères sont avantageusement choisis parmi les oléfines décrites ci-dessus, parmi les dioléfines comprenant de 4 à 18 atomes de carbone, telles que le 4-vinylcyclohexène, le dicyclopentadiène, le méthylène- et l'éthylidène-norbornène, le 1,3-butadiène, l'isoprène et le 1,3-pentadiène.

De préférence, les polyoléfines sont le polyéthylène, le polypropylène, les copolymères de l'éthylène, les copolymères du propylène et leurs mélanges.

Les copolymères d'éthylène conviennent particulièrement bien, spécialement ceux comprenant de 0,01 à 5 % en poids d'une alpha-oléfine contenant jusqu'à 12 atomes de carbone, par exemple le butène ou l'hexène.

La polyoléfine particulièrement préférée est le polyéthylène, et plus particulièrement le polyéthylène de haute densité. Celui-ci présente avantageusement une masse volumique standard d'au moins 935 kg/m³, en particulier d'au moins 940 kg/m³. La masse volumique standard ne dépasse pas, en général, 960 kg/m³, de préférence pas 955 kg/m³. Le polyéthylène présente en outre habituellement un indice de fluidité (mesuré à 190 °C sous une charge de 2,16 kg selon la norme ISO 1133 - 1991) d'au moins 0,1 g/10 min, de préférence d'au moins 1 g/10 min. L'indice de fluidité ne dépasse pas, le plus souvent, 40 g/10 min, plus particulièrement pas 35 g/10 min.

Le monomère fonctionnel greffable mis en oeuvre dans le procédé selon l'invention a pour fonction de modifier les propriétés de la polyoléfine en se greffant sur la polyoléfine sous l'effet de radicaux libres produits par le générateur de radicaux. Le monomère fonctionnel greffable est en général un composé comprenant une insaturation vinylique et éventuellement un ou plusieurs noyaux aromatiques et/ou un ou plusieurs groupements carbonyle. Le monomère greffable peut par exemple être choisi parmi les acides insaturés mono- ou dicarboxyliques et leurs dérivés, les anhydrides insaturés d'acide mono- ou dicarboxylique et leurs dérivés. Les monomères greffables comprennent de préférence de 3 à 20 atomes de carbone. On peut citer comme exemples typiques l'acide acrylique, l'anhydride maléique, le dodécène-1, le styrène, la vinylpyridine, le divinylbenzène, l'hexadiène-1,4 et leurs mélanges. De bons résultats peuvent être obtenus avec l'anhydride maléique, le styrène, le divinylbenzène et leurs mélanges. On préfère tout particulièrement l'anhydride maléique.

La quantité de monomère fonctionnel greffable mise en oeuvre dans le procédé selon l'invention dépend des propriétés qu'on vise à obtenir pour la polyoléfine greffée, de la quantité de générateur de radicaux mise en oeuvre et du temps de séjour du mélange dans l'extrudeuse. Elle est en général suffisante pour permettre une amélioration des propriétés de la polyoléfine greffée obtenue. En pratique, on n'a pas intérêt à mettre en oeuvre une quantité trop élevée car tout excès dépassant la quantité nécessaire pour obtenir le taux de greffage maximal n'apporte aucune amélioration au produit fini. La quantité est habituellement au moins égale à 0,01 partie en poids pour 100 parties en poids de polyoléfine, elle est préférentiellement au moins égale à 0,1 partie en poids, les valeurs d'au moins 0,5 partie en poids sont les plus courantes. La quantité ne dépasse pas, en général, 10 parties en poids pour 100 parties en poids de polyoléfine, le plus souvent elle ne dépasse pas 8 parties en poids, les valeurs d'au plus 5 parties en poids étant les plus recommandées, par exemple environ 2.

La réaction de greffage dans le procédé selon l'invention a lieu sous l'effet d'un générateur de radicaux. On utilise de préférence des peroxydes organiques à titre de générateur de radicaux. Ceux-ci présentent avantageusement une demi-vie d'au moins 1 minute à 170 °C. On peut citer comme exemples typiques le peroxyde de t-butyl cumyl, le α-α'-bis(t-butylperoxy isopropyl)benzène, le 3,5-bis(t-butylperoxy)3,5-diméthyl 1,2-dioxolane, le peroxyde de di-t-butyl, le 2,5-diméthyl-2,5-di-t-butylperoxyhexane, le p-menthane hydroperoxyde, le pinane hydroperoxyde, le diisopropylbenzène mono-α-hydroperoxyde, l'hydroperoxyde de cumène, le t-butylhydroperoxyde et leurs mélanges. Les générateurs de radicaux préférés sont le α-α'-bis(t-butylperoxy isopropyl)benzène et le 2,5-diméthyl-2,5-di-t-butylperoxyhexane.

Le générateur de radicaux est en général mis en oeuvre dans le procédé selon l'invention en une quantité suffisante pour permettre d'effectuer le greffage. Par ailleurs, il est souhaitable que la quantité ne dépasse pas la quantité minimale nécessaire car tout excès de générateur de radicaux entraine une dégradation de la polyoléfine. La quantité est habituellement au moins égale à 0,005 partie en poids pour 100 parties en poids de polyoléfine, elle est en particulier au moins égale à 0,01 partie en poids, les valeurs d'au moins 0,02 partie en poids étant les plus avantageuses. En général, la quantité ne dépasse pas 1 partie en poids pour 100 parties en poids de polyoléfine, de préférence pas 0,5 partie en poids, les valeurs d'au plus 0,1 étant les plus recommandées, par exemple environ 0,04 partie en poids.

L'additif anti-oxydant mis en oeuvre dans le procédé selon l'invention peut être tout anti-oxydant connu pour les polyoléfines. Il peut par exemple être sélectionné parmi les composés comprenant un groupement phénol stériquement encombré, parmi les composés phosphorés et parmi les composés comprenant un groupement thio-éther. De bons résultats sont obtenus avec les composés comprenant un groupement phénol stériquement encombré et les composés phosphorés. On utilise de préférence un composé comprenant un groupement phénol stériquement encombré. A titre de composés comprenant un groupement phénol stériquement encombré, on peut utiliser par exemple le pentaérythrityl tétrakis 3,5-di-t-butyl-4-hydroxyphényl propionate, le stéaryl bêta-(3,5-di-t-butyl-4-hydroxyphényl)-propionate, le N,N'-bis(3-(3',5'-di-t-butyl-4'-hydroxyphényl)-propionyl)hexaméthylènediamine, le bis(bêta-3,5-di-t-butyl-4-hydroxyphényl-éthyl)subérate, le diéthyl 3,5-di-t-butyl,4-hydroxybenzylphosphonate et le calcium bis(éthyl-(3,5-di-t-butyl-4-hydroxybenzyl)phosphonate). A titre de composés phosphorés, on peut mettre en oeuvre par exemple le tris(2,4-di-t-butylphényl)phosphite, le tris(p-nonylphényl)phosphite, le tris(2,4-dinonylphényl)phosphite et le tétrakis(2,4-di-t-butylphényl)4,4'-biphénylylènediphosphonite. A titre de composés comprenant un groupement thio-éther, il peut s'agir par exemple de distéaryl thiodipropionate et de dilauryl thiodipropionate. On peut bien entendu mettre en oeuvre plusieurs additifs anti-oxydant simultanément. Lorsqu'on vise une application alimentaire pour la polyoléfine greffée stabilisée, on utilise de préférence les composés comprenant un groupement phénol stériquement encombré et les composés phosphorés, les composés comprenant un groupement thio-éther convenant moins pour des applications alimentaires. Le pentaérythrityl tétrakis (3,5-di-t-butyl-4-hydroxyphényl propionate), le tris(2,4-di-t-butylphényl)phosphite et leurs mélanges conviennent particulièrement bien.

L'additif anti-oxydant mis en oeuvre dans le procédé selon l'invention a pour fonction de neutraliser l'excès de radicaux présents dans l'extrudeuse et de conférer de la stabilité thermique à la polyoléfine greffée lors de son utilisation ultérieure. La quantité totale d'additif anti-oxydant mise en oeuvre dépend dès lors de la quantité de générateur de radicaux mise en oeuvre, de l'application visée pour la polyoléfine greffée car elle détermine l'étendue de la stabilité recherchée, de la nature de la polyoléfine et de l'efficacité de l'additif anti-oxydant. La quantité totale est en général au moins égale à 0,01 partie en poids pour 100 parties en poids de polyoléfine, elle est habituellement au moins égale à 0,05 partie en poids, les quantités d'au moins 0,1 partie en poids étant les plus avantageuses. La quantité totale est le plus souvent au plus égale à 10 parties en poids pour 100 parties en poids de polyoléfine, de préférence au plus égale à 5 parties en poids, les quantités d'au plus 1 partie en poids étant les plus courantes, par exemple environ 0,5 partie en poids.

L'additif anti-oxydant est avantageusement mis en oeuvre dans le procédé selon l'invention sous la forme d'une poudre, éventuellement mélangée au préalable avec une partie de la polyoléfine.

L'agent préstabilisant utilisé dans la forme de réalisation avantageuse du procédé selon l'invention décrite plus haut peut être choisi parmi les agents stabilisants conventionnels tels que les agents anti-UV, les agents anti-acide, les agents anti-oxydant et leurs mélanges. Les agents anti-oxydant sont spécialement préférés.

La quantité totale d'agent préstabilisant mise en oeuvre dans cette forme de réalisation doit être faible afin de ne pas compromettre l'efficacité du greffage de la polyoléfine. Elle ne dépasse pas, en général, 0,5 partie en poids pour 100 parties en poids de polyoléfine, le plus souvent elle est au plus égale à 0,4 partie en poids, les quantités d'au plus 0,3 partie en poids étant les préférées, par exemple environ 0,2 partie en poids. La quantité totale d'agent préstabilisant est habituellement au moins égale à 0,01 partie en poids pour 100 parties en poids de polyoléfine, de préférence au moins égale à 0,03 partie en poids, plus particulièrement au moins égale à 0,05 partie en poids.

Au cours de l'extrusion dans le procédé selon l'invention, on peut incorporer à un moment quelconque des additifs usuels des polyoléfines, tels que par exemple les agents stabilisants précités autres que les additifs anti-oxydant, des agents antistatiques, des colorants organiques ou minéraux (tels que par exemple l'oxyde de titane ou de fer) et des matériaux de charge tels que des fibres de verre, pour autant qu'ils n'interfèrent pas avec la réaction de greffage et n'affectent pas la stabilité thermique conférée par l'additif anti-oxydant.

Le procédé selon l'invention permet l'obtention de polyoléfines greffées stabilisées présentant à la fois un taux de greffage élevé et une stabilité thermique élevée. Les polyoléfines greffées stabilisées ainsi obtenues trouvent une utilisation intéressante comme adhésif, par exemple entre une couche en polyoléfine qui est de nature non polaire et une couche en résine polaire, et comme agent de compatibilisation, par exemple entre une matrice de polyoléfine et une matière de charge telle que des fibres de verre.

La présente invention concerne dès lors aussi une polyoléfine greffée stabilisée obtenue au moyen du procédé suivant l'invention décrit ci-dessus, caractérisée en ce qu'elle est obtenue à partir de polyéthylène et en ce qu'elle présente une masse volumique standard (mesurée selon la norme ISO 1183 - 1987) de 930 à 960 kg/m³, un indice de fluidité (mesuré selon la norme ISO 1133 - 1991 sous une charge de 5 kg et à 190 °C) de 0,05 à 20 g/10 min, une teneur en monomère fonctionnel greffé de 0,01 à 10 parties en poids pour 100 parties en poids de polyéthylène et une teneur totale en additif anti-oxydant de 0,05 à 10 parties en poids pour 100 parties en poids de polyéthylène.

Les polyoléfines greffées stabilisées préférées sont celles obtenues à partir de polyéthylène. Ces polyoléfines greffées stabilisées présentent avantageusement une masse volumique standard (mesurée selon la norme ISO 1183 - 1987) d'au moins 935 kg/m³. La masse volumique standard, en général, ne dépasse pas 955 kg/m³. De préférence, ces polyoléfines greffées stabilisées présentent un indice de fluidité (mesuré selon la norme ISO 1133 - 1991 sous une charge de 5 kg et à 190 °C) d'au moins 0,1 g/10 min, les valeurs d'au moins 0,15 g/10 min étant les plus avantageuses. L'indice de fluidité ne dépasse de préférence pas 10 g/10 min, plus particulièrement pas 5 g/10 min.

Le plus souvent, les polyoléfines greffées stabilisées suivant l'invention présentent une teneur en monomère fonctionnel greffé d'au moins 0,1 partie en poids pour 100 parties en poids de polyoléfine, les teneurs d'au moins 0,5 partie en poids étant les plus courantes. De préférence, la teneur est d'au plus 8 parties en poids pour 100 parties en poids de polyoléfine, plus précisément au plus 5 parties en poids, par exemple environ 2 parties en poids.

Les polyoléfines greffées stabilisées suivant l'invention comprennent un ou plusieurs additifs antioxydants, de préférence en une quantité totale d'au moins 0,05 partie en poids pour 100 parties en poids de polyoléfine, plus particulièrement d'au moins 0,1 partie en poids. La quantité totale est le plus souvent au plus égale à 5 parties en poids pour 100 parties en poids de polyoléfine, les quantités d'au plus 1 partie en poids étant les plus favorables, par exemple environ 0,5 partie en poids.

L'invention concerne aussi le polyéthylène greffé stabilisé présentant une ou plusieurs caractéristiques énoncées ci-dessus.

L'invention concerne également un procédé continu de greffage au sein d'une masse fondue procurant des polyoléfines greffées peu réticulées.

A cet effet, l'invention porte sur un procédé continu de greffage d'une polyoléfine au sein d'une masse fondue comprenant la polyoléfine, un monomère fonctionnel greffable et un générateur de radicaux conforme aux revendications 1 à 17, dans une extrudeuse comprenant à l'entrée une zone d'alimentation dans laquelle la polyoléfine, le monomère fonctionnel greffable et le générateur de radicaux sont introduits au moins partiellement, à sa sortie une zone d'évacuation, et, entre la zone d'évacuation et l'endroit situé à mi-chemin de l'extrudeuse, un ou plusieurs éléments de malaxage suivis d'un ou plusieurs éléments de transport à pas gauche.

Ce procédé permet de dépolymériser les réticulats générés lors du greffage et de réduire ainsi la viscosité de la polyoléfine greffée, ce qui rend la polyoléfine greffée particulièrement apte à être utilisée comme agent de couplage entre une matrice de polyoléfine et des fibres de verre renforçant la matrice. Ce procédé est dès lors appelé ci-après "procédé de greffage à faible réticulation".

Par endroit situé à mi-chemin de l'extrudeuse on entend désigner l'endroit situé au milieu entre la zone d'alimentation et la zone d'évacuation.

Par élément de malaxage on entend désigner un élément de la vis d'extrudeuse qui a pour fonction d'échauffer la matière à extruder par effet de cisail lement et de la porter à fusion. Cet élément est également utilisé pour homogénéiser la matière à extruder, disperser des additifs et/ou des charges dans la matière ou favoriser le contact entre les réactifs mis en oeuvre.

Par élément de transport à pas gauche on entend désigner un élément de la vis d'extrudeuse qui convoit la matière dans le sens inverse de celui des éléments de transport à pas droit. Ces éléments de transport à pas droit ont pour fonction de propager la matière. L'élément de transport à pas gauche s'oppose donc au mouvement général dans l'extrudeuse et crée une sorte de barrage qui a pour effet de remplir les éléments situés en amont de l'élément de transport à pas gauche, à savoir l'élément de malaxage.

Une des caractéristiques essentielles du procédé de greffage à faible réticulation réside dans la séquence d'un ou de plusieurs éléments de malaxage suivis d'un ou de plusieurs éléments de transport à pas gauche, cette séquence se situant entre l'endroit situé à mi-chemin et la sortie de l'extrudeuse, c'est-à-dire dans la deuxième moitié de l'extrudeuse.

L'extrudeuse mise en oeuvre dans le procédé de greffage à faible réticulation peut éventuellement comprendre plusieurs séquences d'au moins un élément de malaxage suivi d'au moins un élément de transport à pas gauche situées dans la deuxième moitié de l'extrudeuse.

La zone d'alimentation de l'extrudeuse mise en oeuvre dans le procédé de greffage à faible réticulation est en général composé d'éléments de transport à pas droit.

La zone d'évacuation de l'extrudeuse peut être suivie d'un dispositif de granulation ou d'un dispositif donnant à la matière extrudée une forme profilée telle qu'un film ou un tuyau. Le plus souvent, la zone d'évacuation de l'extrudeuse est suivie d'un dispositif de granulation.

L'extrudeuse mise en oeuvre dans le procédé de greffage à faible réticulation comporte généralement, outre la zone d'alimentation, la zone d'évacuation et un ou plusieurs éléments de malaxage suivis d'un ou plusieurs éléments de transport à pas gauche, les zones suivantes :
- une zone de fusion. Celle-ci est habituellement située immédiatement après la zone d'alimentation. Elle est le plus souvent composée d'éléments de malaxage. De préférence, ces éléments de malaxage sont suivis d'au moins un élément de transport à pas gauche, qui sert à remplir la zone de fusion afin de compléter la réaction de fusion.
- une zone de compression. Celle-ci précède habituellement la zone d'évacuation. Elle a pour fonction de pousser la matière vers la zone d'évacuation et donc vers la sortie de l'extrudeuse. Elle est en général composée d'éléments de transport à pas droit.

Dans une variante préférée, l'extrudeuse comporte en plus :
- une zone de réaction supplémentaire. Celle-ci est généralement disposée immédiatement après la zone de fusion. Elle a pour fonction de convoyer la matière à extruder à l'aide d'éléments de transport à pas droit et éventuellement d'homogénéiser la matière à l'aide d'éléments de malaxage. Il est préférable que, dans la zone de réaction supplémentaire, la longueur totale des éléments de malaxage ne dépasse pas 20 % de la longueur totale des éléments de transport à pas droit.
- une zone de dégazage. Celle-ci a pour fonction d'éliminer les réactifs volatils non convertis durant la réaction de greffage. Elle est avantageusement disposée après la zone de réaction et avant la zone de compression. Elle est le plus souvent constituée d'éléments de transport à pas droit. De préférence, elle est précédée d'un élément de transport à pas gauche qui, étant rempli de matière, joue le rôle de cloison entre la zone de réaction et la zone de dégazage.

Dans le procédé de greffage à faible réticulation selon l'invention, on utilise une extrudeuse comprenant à sa sortie une zone de compression précédant la zone d'évacuation, et on introduit au moins un additif anti-oxydant dans la masse fondue au plus tard avant l'entrée de celle-ci dans la zone de compression, tel que décrit dans le procédé continu de greffage d'une polyoléfine plus haut. Dans cette forme d'exécution la séquence d'un ou plusieurs éléments de malaxage suivis d'un ou plusieurs éléments de transport à pas gauche est avantageusement disposée entre l'endroit où l'additif anti-oxydant est introduit et la zone d'évacuation.

Dans le procédé de greffage à faible réticulation, la nature du monomère fonctionnel greffable, du générateur de radicaux et les quantités dans lesquelles ils sont mis en oeuvre, ainsi que les conditions opératoires (température et durée) sont conformes à celles décrites plus haut pour le procédé continu de greffage.

Dans le procédé de greffage à faible réticulation, on peut éventuellement mettre en oeuvre un ou plusieurs additifs usuels et/ou un agent préstabilisant tels que décrits plus haut pour le procédé continu de greffage.

Les polyoléfines utilisables dans le procédé de greffage à faible réticulation peuvent être choisies parmi les polymères d'oléfines linéaires ou branchées. Les oléfines contiennent en général jusqu'à 20 atomes de carbone, en particulier jusqu'à 12 atomes de carbone, de préférence jusqu'à 8 atomes de carbone. On peut citer à titre d'exemples d'oléfines l'éthylène, le propylène, le 1-butène, le 1-pentène, le 3-méthyl-1-butène, le 1-hexène, les 3- et 4-méthyl-1-pentènes et le 1-octène. Les oléfines préférées sont les oléfines linéaires contenant de 2 à 8 atomes de carbone.

Les polyoléfines peuvent être sélectionnées parmi les homopolymères des oléfines précitées et parmi les copolymères de ces oléfines, en particulier parmi les homopolymères d'éthylène ou de propylène et les copolymères d'éthylène ou de propylène avec un ou plusieurs comonomères. Les comonomères sont avantageusement choisis parmi les oléfines décrites ci-dessus et parmi les dioléfines comprenant de 4 à 18 atomes de carbone.

De préférence, les polyoléfines sont le polyéthylène, le polypropylène, les copolymères de l'éthylène, les copolymères du propylène et leurs mélanges.

La polyoléfine particulièrement préférée est le polyéthylène, et plus particulièrement le polyéthylène de haute densité.

L'invention concerne également un procédé de traitement de granules d'une polyoléfine greffée comprenant un additif anti-oxydant afin d'obtenir des granules présentant une stabilité élevée à l'humidité se traduisant par une modification peu significative de l'indice de fluidité même après de longues périodes de stockage en présence d'humidité.

Le document EP-A-0202921 divulgue, en toute généralité, un procédé pour éliminer l'anhydride maléique non réagi d'une polyoléfine greffée d'anhydride maléique par insufflage de vapeur sous pression.

Le document Chemical Abstracts n° 95 : 220790j mentionne qu'une polyoléfine greffée d'anhydride maléique peut être traitée au moyen d'eau chaude ou d'air chaud.

Ces documents ne concernent pas le traitement de granules de polyoléfine greffée comprenant un additif anti-oxydant.

L'invention porte sur un procédé de traitement de granules d'une polyoléfine greffée comprenant un additif anti-oxydant, ladite polyoléfine greffée étant préparée dans une extrudeuse comprenant, à sa sortie, une zone de compression précédant une zone d'évacuation, et au moins une partie dudit additif anti-oxydant est introduit dans la masse fondue au plus tard avant l'entrée de celle-ci dans la zone de compression de l'extrudeuse, conformément à l'une quelconque des revendications 1 à 17, selon lequel on met les granules de polyoléfine greffée en contact avec un milieu gazeux contenant de la vapeur d'eau.

La mise en contact des granules de polyoléfine greffée avec un milieu gazeux contenant de la vapeur d'eau (appelée ci-après "traitement à la vapeur d'eau") a pour fonction de faire réagir l'eau avec les monomères fonctionnels qui sont greffés sur la polyoléfine et de préférence de manière à saturer la polyoléfine greffée en eau.

Le traitement à la vapeur d'eau peut être réalisé par tout moyen connu adéquat pourvu qu'il permette une mise en contact de la vapeur d'eau avec les granules de manière à faire réagir l'eau avec les monomères fonctionnels greffés. Il peut être effectué dans un système statique, par exemple dans un réservoir fermé dans lequel les granules sont versés et maintenus dans une atmosphère contenant de la vapeur d'eau. En variante, il peut être effectué dans un système dynamique, dans lequel les granules sont soumis à un balayage au moyen d'un courant gazeux contenant de la vapeur d'eau tel que dans une colonne de strippage, ou dans lequel les granules sont entraînés (ou fluidisés) par un courant gazeux contenant de la vapeur d'eau tel que dans un réacteur à lit fluidisé. On préfère effectuer le traitement à la vapeur d'eau dans un système statique.

Le traitement à la vapeur d'eau est réalisé en mettant les granules en contact avec un milieu gazeux contenant de la vapeur d'eau, dans laquelle la vapeur d'eau peut être diluée dans un gaz inerte tel que de l'azote et de l'air. Il est souhaitable d'opérer à une concentration en vapeur d'eau telle que la réaction entre l'eau et le monomère fonctionnel greffé soit favorisée. On opère de préférence dans un milieu gazeux saturé en vapeur d'eau à la température de travail. Il est par ailleurs recommandé que le gaz inerte contient moins de 10 % (en particulier moins de 5 %) en volume d'oxygène afin d'éviter la dégradation de la polyoléfine par oxydation.

Les conditions opératoires (température, pressions, durée) dans lesquelles le traitement à la vapeur d'eau est réalisé peuvent varier dans une large mesure. Elles sont de préférence choisies de manière à ce que de la vapeur d'eau soit présente dans le milieu gazeux et à ce qu'une réaction, de préférence aussi complète que possible, entre l'eau et les monomères fonctionnels greffés puisse se produire tout en évitant la fusion et/ou la dégradation de la polyoléfine.

La pression partielle de la vapeur d'eau dans le milieu gazeux est généralement d'au moins 0,01 MPa, en particulier d'au moins 0,5 MPa, les valeurs d'au moins 0,1 MPa sont préférées. La pression partielle de la vapeur d'eau est le plus souvent d'au plus 1 MPa, plus spécialement d'au plus 0,5 MPa, les valeurs d'au plus 0,2 MPa étant recommandées. On opère de préférence à une pression partielle de vapeur d'eau d'environ 0,1 MPa.

Le traitement à la vapeur d'eau est en général effectué à une température d'au moins 80 °C, plus précisément d'au moins 90 °C, les valeurs d'au moins 100 °C étant les plus courantes. La température est habituellement d'au plus 200 °C, en particulier d'au plus 170 °C, les valeurs d'au plus 140 °C étant avantageuses. On opère de préférence à une température d'environ 100 °C.

La durée du traitement à la vapeur d'eau est généralement d'au moins 1 min, plus particulièrement d'au moins 2 min, les durées d'au moins 5 min étant les plus courantes. La durée ne dépasse en général pas 5 h, plus précisément pas 1 h, les durées d'au maximum 30 min étant préférées.

Les polyoléfines utilisables dans le procédé de traitement de granules d'une polyoléfine greffée peuvent être choisies parmi les polymères d'oléfines linéaires ou branchées. Les oléfines contiennent en général jusqu'à 20 atomes de carbone, en particulier jusqu'à 12 atomes de carbone, de préférence jusqu'à 8 atomes de carbone. On peut citer à titre d'exemples d'oléfines l'éthylène, le propylène, le 1-butène, le 1-pentène, le 3-méthyl-1-butène, le 1-hexène, les 3- et 4-méthyl-1-pentènes et le 1-octène. Les oléfines préférées sont les oléfines linéaires contenant de 2 à 8 atomes de carbone.

Les polyoléfines peuvent être sélectionnées parmi les homopolymères des oléfines précitées et parmi les copolymères de ces oléfines, en particulier parmi les homopolymères d'éthylène ou de propylène et les copolymères d'éthylène ou de propylène avec un ou plusieurs comonomères. Les comonomères sont avantageusement choisis parmi les oléfines décrites ci-dessus et parmi les dioléfines comprenant de 4 à 18 atomes de carbone.

De préférence, les polyoléfines sont le polyéthylène, le polypropylène, les copolymères de l'éthylène, les copolymères du propylène et leurs mélanges.

La polyoléfine particulièrement préférée est le polyéthylène, et plus particulièrement le polyéthylène de haute densité.

Le procédé de traitement de granules selon l'invention permet l'obtention de granules d'une polyoléfine greffée dont les propriétés (en particulier l'indice de fluidité) n'évoluent pas significativement au cours du temps lorsque les granules sont exposés à l'humidité (par exemple lors de leur stockage). Le procédé de traitement de granules selon l'invention permet dès lors d'obtenir des granules de polyoléfine greffée qui ne nécessitent aucune précaution de stockage vis-à-vis de l'humidité.

La nature du monomère fonctionnel greffable, du générateur de radicaux et les quantités dans lesquelles ils sont mis en oeuvre dans cette forme de réalisation, ainsi que les conditions opératoires (température et durée) sont conformes à celles décrites plus haut pour le procédé continu de greffage.

On obtient des résultats particulièrement avantageux lorsque le monomère fonctionnel greffable mis en oeuvre est choisi parmi les anhydrides insaturés d'acide mono- ou dicarboxylique. Dans ce cas, les granules issus du traitement à la vapeur d'eau peuvent être avantageusement utilisés comme adhésif, par exemple entre une couche en polyoléfine qui est de nature non polaire et une couche en résine polaire, en particulier en une résine comprenant des groupements époxy. L'anhydride maléique convient particulièrement bien.

On peut éventuellement mettre en oeuvre, dans la préparation des granules de polyoléfine greffée, outre l'additif anti-oxydant tel que décrit ci-dessus, un ou plusieurs additifs usuels et/ou un agent préstabilisant tels que décrits plus haut pour le procédé continu de greffage.

L'extrudeuse utilisée comprend avantageusement les parties (1) à (8) décrites plus haut, la zone d'évacuation de l'extrudeuse étant en outre suivie d'un dispositif de granulation à la sortie duquel on recueille des granules de la polyoléfine greffée que l'on met ensuite en contact avec un milieu gazeux contenant de la vapeur d'eau de la manière exposée ci-avant.

Dans une variante particulière, la polyoléfine greffée est obtenue dans une extrudeuse comprenant, en outre, à l'entrée, une zone d'alimentation dans laquelle la polyoléfine, le monomère fonctionnel greffable et le générateur de radicaux sont introduits au moins partiellement, à sa sortie, une zone d'évacuation, et, entre la zone d'évacuation et l'endroit situé à mi-chemin de l'extrudeuse, un ou plusieurs éléments de malaxage suivis d'un ou plusieurs éléments de transport à pas gauche, tel que décrit plus haut dans le procédé de greffage à faible réticulation.

L'extrudeuse utilisée dans la variante particulière comprend avantageusement les parties (1) à (8) décrites plus haut, la zone d'évacuation de l'extrudeuse étant en outre suivie d'un dispositif de granulation.

La présente invention porte également sur des granules d'une polyoléfine greffée comprenant un additif anti-oxydant dont l'indice de fluidité présente une stabilité d'au moins 0,90, définie par le rapport entre, d'une part, l'indice de fluidité mesuré après stockage des granules pendant 48 heures à température ambiante, à pression atmosphérique et dans un milieu gazeux saturé en vapeur d'eau, et, d'autre part, l'indice de fluidité mesuré immédiatement après la fabrication des granules (la fabrication comprenant tout traitement ultérieur éventuel succédant la granulation) et avant stockage. En particulier, la stabilité de l'indice de fluidité est d'au moins 0,95, les valeurs d'au moins 0,97 étant recommandées. La stabilité de l'indice de fluidité étant défini comme un rapport d'indices de fluidité, elle est indépendante de la méthode utilisée pour mesurer l'indice de fluidité pourvu que l'on utilise la même méthode avant et après stockage.

Les granules de polyoléfine greffée préférés sont ceux obtenus à partir de polyéthylène. Ces granules de polyéthylène greffé présentent une masse volumique standard (mesurée selon la norme ISO 1183 - 1987) de 930 à 960 kg/m³, un indice de fluidité (mesuré selon la norme ISO 1133 - 1991 sous une charge de 5 kg et à 190 °C) de 0,05 à 20 g/10 min, une teneur en monomère fonctionnel greffé de 0,01 à 10 parties en poids pour 100 parties en poids de polyéthylène. Avantageusement, ces granules présentent une masse volumique standard (mesurée selon la norme ISO 1183 - 1987) d'au moins 935 kg/m³. La masse volumique standard, en général, ne dépasse pas 955 kg/m³. De préférence, ces polyoléfines greffées stabilisées présentent un indice de fluidité (mesuré selon la norme ISO 1133 - 1991 sous une charge de 5 kg et à 190 °C) d'au moins 0,1 g/10 min, les valeurs d'au moins 0,15 g/10 min étant les plus avantageuses. L'indice de fluidité ne dépasse pas, de préférence, 10 g/10 min, plus particulièrement pas 5 g/10 min.

Le plus souvent, les granules d'une polyoléfine greffée suivant l'invention présentent une teneur en monomère fonctionnel greffé d'au moins 0,1 partie en poids pour 100 parties en poids de polyoléfine, les teneurs d'au moins 0,5 partie en poids étant les plus courantes. Habituellement la teneur est d'au plus 8 parties en poids pour 100 parties en poids de polyoléfine, plus précisément au plus 5 parties en poids, par exemple environ 2 parties en poids.

Les granules de polyoléfine greffée selon l'invention sont le plus souvent caractérisés par une granulométrie définie par un diamètre moyen d'au moins 0,5 mm, plus spécialement d'au moins 2 mm, les valeurs d'au moins 1 mm étant avantageuses. Le diamètre moyen est habituellement d'au plus 10 mm, plus précisément d'au plus 7 mm, les valeurs d'au plus 5 mm étant les plus courantes.

Les exemples dont la description suit servent à illustrer l'invention. Les exemples 3 à 7, 10 et 14 sont donnés à titre de comparaison. La signification des symboles utilisés dans ces exemples, les unités exprimant les grandeurs mentionnées et les méthodes de mesure de ces grandeurs sont explicitées ci-dessous.
- MI2 =: indice de fluidité de la polyoléfine, mesuré à 190 °C sous une charge de 2,16 kg selon la norme ISO 1133 - 1991.
- MI5 =: indice de fluidité de la polyoléfine, mesuré à 190 °C sous une charge de 5 kg selon la norme ISO 1133 - 1991.
- MVS =: masse volumique standard de la polyoléfine exprimée en kg/m³, mesurée selon la norme ISO 1183 - 1987.
- TG =: taux de greffage exprimé en partie en poids de monomère fonctionnel greffé pour 100 parties en poids de polyoléfine, mesuré par spectrométrie à l'infra-rouge.
- PI =: période d'induction de l'oxydation de la polyoléfine à 210 °C exprimée en minutes. La période d'induction est mesurée par une analyse thermique dans laquelle on soumet la polyoléfine à une oxydation sous oxygène à une température constante de 210 °C et on mesure le temps jusqu'à l'apparition d'un phénomène exothermique provoqué par l'oxydation de la polyoléfine. La période d'induction est une mesure de la stabilité thermique.

### Exemple 1 (conforme à l'invention)

Dans cet exemple, on a produit un polyéthylène greffé à l'anhydride maléique stabilisé au moyen d'un additif anti-oxydant du type phénol encombré et d'un additif anti-oxydant du type phosphite.

Cet exemple a été réalisé dans une extrudeuse du type co-malaxeur commercialisée par la société BUSS (type MDK/E46B). Cette extrudeuse a été aménagée de manière à ce qu'elle comprenne successivement les zones suivantes :
(1) zone d'alimentation principale,
(2) zone d'échauffement,
(3) première zone de réaction pourvue d'un orifice d'alimentation,
(4) deuxième zone de réaction pourvue d'un orifice d'alimentation,
(5) zone de dégazage permettant d'évacuer les réactifs n'ayant pas réagi,
(6) zone de compression pourvue d'un orifice d'alimentation,
(7) zone d'évacuation, suivie d'une vis de granulation.

Cette extrudeuse a été alimentée dans la partie (1) à un débit de 10 kg/h par un mélange contenant :
- 100 parties en poids de polyéthylène de haute densité commercialisée sous la dénomination ELTEX® B 4020 P par SOLVAY (présentant un MI2 de 1,8 g/10 min et une MVS de 951 kg/m³),
- 2,04 parties en poids d'anhydride maléique,
- 0,04 partie en poids de 2,5-diméthyl-2,5-di-t-butyl-peroxyhexane.

Par l'orifice d'alimentation de la zone (3), l'extrudeuse a également été alimentée à raison de 80 g/h par un mélange contenant :
- 100 parties en poids de polyéthylène de haute densité ELTEX® B 4020 P,
- 50 parties en poids d'agent anti-acide (hydrotalcite enrobée d'acide stéarique),
- 25 parties en poids d'additif anti-oxydant [pentaérytrityl tétrakis (3,5-di-t-butyl-4-hydroxyphényl propionate)],
- 25 parties en poids d'addiftif anti-oxydant [tris(2,4-di-t-butyl-phényl)phosphite].

La quantité totale d'additif anti-oxydant mise en oeuvre était de 0,2 partie en poids pour 100 parties en poids de polyéthylène.

Les conditions d'extrusion ont été :
- température de la zone (2) : 200 °C,
- température des zones (3) et (4) : 220 °C,
- température des zones (5) et (6) : 200 °C,
- température des vis : 160 °C,
- vitesse de rotation de la vis de l'extrudeuse : 150 tours/min,
- vitesse de rotation de la vis de granulation : 15 tours/min.

Le produit obtenu présentait les caractéristiques suivantes :
- MI5 = 0,25 g/10 min.
- TG = 1,4 partie en poids.
- PI = 4 minutes.

### Exemple 2 (conforme à l'invention)

Dans cet exemple on a répété les opérations de l'exemple 1 dans les mêmes conditions à l'exception que la seconde introduction est intervenue en zone (4) au lieu d'en zone (3).

Le produit obtenu présentait les caractéristiques suivantes :
- MI5 = 0,17 g/10 min.
- TG = 1,6 partie en poids.
- PI = 7 minutes.

### Exemple 3 (de comparaison)

Dans cet exemple on a préparé un polyéthylène greffé à l'anhydride maléique selon le procédé décrit dans le brevet US 4927888 dans lequel on n'ajoute pas d'additif anti-oxydant.

On a répété les opérations de l'exemple 1 en omettant la seconde introduction dans la zone (3).

Le produit obtenu ne contenant ni additif anti-oxydant ni agent anti-acide présentait les caractéristiques suivantes :
- MI5 = 0,13 g/10 min.
- TG = 1,7 partie en poids.
- PI ≤ 2 minutes.

La comparaison des résultats de l'exemple 3 avec ceux obtenus dans les exemples 1 et 2 fait apparaître le progrès apporté par l'invention pour ce qui concerne la stabilité thermique à l'oxygène de la polyoléfine greffée (mesurée par le biais de PI).

### Exemple 4 (de comparaison)

Dans cet exemple, on a produit un polyéthylène greffé à l'anhydride maléique en introduisant l'additif anti-oxydant simultanément avec les autres réactifs (polyoléfine, monomère fonctionnel greffable, générateur de radicaux) dans la zone d'alimentation principale.

On a utilisé la même extrudeuse que celle utilisée dans l'exemple 1 et dans les mêmes conditions d'extrusion.

L'extrudeuse a été alimentée dans la partie (1) à un débit de 10 kg/h par un mélange contenant :
- 100 parties en poids de polyéthylène de haute densité ELTEX® B 4020 P,
- 2,05 parties en poids d'anhydride maléique,
- 0,04 partie en poids de 2,5-diméthyl-2,5-di-t-butyl-peroxyhexane,
- 0,21 partie en poids d'agent anti-acide (hydrotalcite enrobée d'acide stéarique),
- 0,10 partie en poids d'additif anti-oxydant [pentaérytrityl tétrakis (3,5-di-t-butyl-4-hydroxyphényl propionate)],
- 0,10 partie en poids d'additif anti-oxydant [tris(2,4-di-t-butyl-phényl)phosphite].

La quantité totale d'additif anti-oxydant mise en oeuvre relative à la quantité de polyéthylène est identique à celle de l'exemple 1.

Le produit obtenu présentait les caractéristiques suivantes :
- MI5 = 2,4 g/10 min.
- TG = 0,4 partie en poids.
- PI ≤ 2 minutes.

La comparaison des résultats de l'exemple 4 avec ceux obtenus dans les exemples 1 et 2 fait apparaître le progrès apporté par l'invention pour ce qui concerne le taux de greffage et la stabilité thermique à l'oxygène de la polyoléfine greffée (mesurée par le biais de PI).

### Exemple 5 (de comparaison)

Dans cet exemple on a produit un polyéthylène greffé à l'anhydride maléique en introduisant l'additif antioxydant dans la zone de compression précédant la zone d'évacuation de l'extrudeuse.

On a répété les opérations de l'exemple 1 dans les mêmes conditions à l'exception que la seconde introduction est intervenue en zone (6) au lieu d'en zone (3).

Le produit obtenu présentait les caractéristiques suivantes :
- MI5 = 0,17 g/10 min.
- TG = 1,6 partie en poids.
- PI ≤ 2 minutes.

La comparaison des résultats de l'exemple 5 avec ceux obtenus dans les exemples 1 et 2 fait apparaître le progrès apporté par l'invention pour ce qui concerne la stabilité thermique de la polyoléfine greffée (mesurée par le biais de PI).

### Exemple 6 (de comparaison)

Dans cet exemple on a préparé un polyéthylène greffé à l'anhydride maléique par extrusion réactive dans laquelle l'anhydride maléique est introduit en différé à un moment où la masse est déjà fondue et comprend notamment le polyéthylène, le générateur de radicaux et l'additif anti-oxydant.

On a utilisé l'extrudeuse de l'exemple 1 qui a été alimentée dans la partie (1) à un débit de 9.6 kg/h par un mélange contenant :
- 100 parties en poids de polyéthylène de haute densité ELTEX B 4020 P,
- 0,2 partie en poids d'agent anti-acide (hydrotalcite enrobée d'acide stéarique),
- 0,1 partie en poids d'additif anti-oxydant [pentaerytrityl tétrakis (3,5-di-t-butyl-4-hydroxyphényl propionate)],
- 0,1 partie en poids d'additif anti-oxydant [tris(2,4-di-t-butyl-phényl)phosphite],
- 0,04 partie en poids de 2,5-diméthyl-2,5-di-t-butylperoxyhexane.

Par l'orifice d'alimentation de la zone (3), l'extrudeuse a également été alimentée à un débit de 0.4 kg/h par un mélange contenant :
- 100 parties en poids de polyéthylène de haute densité ELTEX B 4020 P,
- 100 parties en poids d'anhydride maléique.

Les conditions d'extrusion ont été celles de l'exemple 1.

Le produit obtenu présentait les caractéristiques suivantes :
- MI5 = 2,4 g/10 min,
- TG = 0,1 partie en poids,
- PI = 13 minutes.

La comparaison des résultats de l'exemple 6 avec ceux obtenus dans l'exemple 1 fait apparaître le progrès apporté par l'invention pour ce qui concerne le taux de greffage.

### Exemple 7 (de comparaison)

Dans cet exemple, on a préparé un polyéthylène greffé à l'anhydride maléique par extrusion réactive dans laquelle le monomère fonctionnel greffable, le générateur de radicaux et l'additif anti-oxydant sont introduits simultanément en différé dans le polyéthylène fondu.

On a utilisé l'extrudeuse de l'exemple 1 qui a été alimentée dans la partie (1) à un débit de 9.6 kg/h par du polyéthylène de haute densité ELTEX B 4020 P.

Par l'orifice d'alimentation de la zone (3), l'extrudeuse a également été alimentée à un débit de 0.4 kg/h par un mélange contenant :
- 100 parties en poids de polyéthylène de haute densité ELTEX B 4020 P,
- 128 parties en poids d'anhydride maléique,
- 12,8 parties en poids d'agent anti-acide (hydrotalcite enrobée d'acide stéarique),
- 6,4 parties en poids d'additif anti-oxydant [pentaérytrityl tétrakis (3,5-di-t-butyl-4-hydroxyphényl propionate)],
- 6,4 parties en poids d'additif anti-oxydant [tris(2,4-di-t-butyl-phényl)phosphite]
- 2,6 parties en poids de 2,5-diméthyl-2,5-di-t-butylperoxyhexane.

Les conditions d'extrusion ont été celles de l'exemple 1.

Le produit obtenu présentait les caractéristiques suivantes :
- MI5 = 3.9 g/10 min,
- TG = 0,6 partie en poids,
- PI = 4 minutes.

La comparaison des résultats de l'exemple 7 avec ceux obtenus dans l'exemple 1 fait apparaître le progrès apporté par l'invention pour ce qui concerne le taux de greffage.

### Exemple 8 (conforme à l'invention)

Dans cet exemple on a produit un polyéthylène greffé à l'anhydride maléique peu réticulé.

On a utilisé une extrudeuse de type double-vis corotatives interpénétrées commercialisée par la société WERNER & PFLEIDERER (type ZSK-40) comprenant les zones (1) à (7) décrites dans l'exemple 1, ainsi qu'une séquence d'un élément de malaxage suivi d'un élément de transport à pas gauche disposée à 70 % de la longueur totale de l'extrudeuse.

Cette extrudeuse a été alimentée dans la zone (1) à un débit de 56 kg/h par un mélange contenant :
- 100 parties en poids de polyéthylène de haute densité ELTEX A 4090 P dont l'indice de fluidité MI5 était de 11 g/10 min et la densité MVS était de 951 kg/m³,
- 0,065 partie en poids de 2,5-diméthyl-2,5-di-t-butylperoxyhexane,
- 0,57 partie en poids d'anhydride maléique,
- 0,14 partie en poids d'additif anti-oxydant [pentaérytrityl tétrakis (3,5-di-t-butyl-4-hydroxyphényl propionate)],
- 0,14 partie en poids d'additif anti-oxydant [tris(2,4-di-t-butyl-phényl)phosphite],
- 0,028 partie en poids d'agent anti-acide (stéarate de calcium).

Par l'orifice d'alimentation de la zone (3) située à 40 % de la longueur de la machine, l'extrudeuse a également été alimentée à raison de 24 kg/h par un mélange contenant :
- 100 parties en poids de polyéthylène de haute densité ELTEX B 4020 P,
- 0,28 partie en poids d'additif anti-oxydant [penta-érytrityl tétrakis (3,5-di-t-butyl-4-hydroxyphényl propionate)],
- 0,28 partie en poids d'additif anti-oxydant [tris(2,4-di-t-butyl-phényl)phosphite],
- 0,057 partie en poids d'agent anti-acide (hydrotalcite enrobée d'acide stéarique).

Les conditions d'extrusion ont été :
- température : 210 °C,
- vitesse de rotation de la vis d'extrudeuse : 300 tours/min.

Le produit obtenu présentait un indice de fluidité MI5 de 20 g/10 min, un taux de greffage TG de 0,36 % et une période d'induction PI de 64 minutes.

### Exemple 9 (conforme à l'invention)

Dans cet exemple on a produit un polyéthylène greffé à l'anhydride maléique peu réticulé au moyen d'une extrudeuse du type double vis corotatives interpénétrées commercialisée par la société WERNER & PFLEIDERER (type ZSK 25) comprenant les zones (1) à (7) de l'exemple 1. La température a été régulée à 190 °C. La vitesse de rotation des vis était de 300 tours/min. L'extrudeuse comprenait dans sa seconde moitié une séquence d'un élément de malaxage suivi d'un élément de transport à pas gauche située à 73 % de sa longueur totale.

On a introduit, à un débit de 12 kg/h, dans la zone (1), le mélange ayant, par kg, la composition suivante :
- 948,6 g du polyéthylène de haute densité décrit à l'exemple 1;
- 0,2 g de 1,3 - di[2 - tert-butylperoxy isopropyl] benzène;
- 15 g d'anhydride maléique.

Le produit obtenu présentait les caractéristiques suivantes :
- MI5 : 1,5 g/10 min.
- TG : 1,14 partie en poids.

### Exemple 10 (de comparaison)

On a procédé à un essai de greffage dans des conditions générales identiques à celles de l'exemple 9, sauf que l'extrudeuse était dépourvue de la séquence de l'élément de malaxage suivi de l'élément de transport à pas gauche.

Le produit obtenu présentait les caractéristiques suivantes :
- MI5 : 0,2 g/10 min.
- TG : 1,36 partie en poids.

La comparaison des résultats des exemples 9 et 10 montre que le compromis entre taux de greffage et indice de fluidité du produit atteint lorsque l'extrudeuse présente un profil de vis permettant un malaxage renforcé dans sa seconde moitié (exemple 9) est plus favorable. En effet, à taux de greffage comparable, le produit de l'exemple 9 est plus fluide, ce qui d'une part améliore sa processabilité et d'autre part permet aux greffons de réagir plus facilement à l'interface quand le produit doit remplir une fonction d'adhésif.

### Exemples 11 à 13 (conformes à l'invention)

### a) Préparation de granules de polyéthylène greffé

Une extrudeuse double-vis corotative interpénétrée de type WERNER & PFLEIDERER ZSK 58 dont la température de consigne a été réglée à 210 °C et dont les vis tournent à une vitesse de 175 rpm comprenant les zones (1) à (7) de l'exemple 1 a été alimentée en zone (1) à raison de 70 kg/h par un mélange contenant :
- 100 parties en poids de polyéthylène de haute densité ELTEX B 4020 P
- 2,14 parties en poids d'anhydride maléique
- 0,14 parties en poids d'additif anti-oxydant [pentaérytrityl tétrakis (3,5-di-t-butyl-4-hydroxyphényl propionate)]
- 0,14 parties en poids d'additif anti-oxydant [tris(2,4-di-t-butyl-phényl)phosphite]
- 0,3 parties en poids d'agent anti-acide (stéarate de calcium)
- 0,09 parties en poids de 1,3-di(2-t-butylperoxy isopropyl) benzene.

En zone (3) on a introduit à raison de 30 kg/h le mélange suivant contenant :
- 100 parties en poids de polyéthylène de haute densité ELTEX B 4020 P
- 0,65 parties en poids d'additif anti-oxydant [pentaérytrityl tétrakis (3,5-di-t-butyl-4-hydroxyphényl propionate)]
- 0,65 parties en poids d'additif anti-oxydant [tris(2,4-di-t-butyl-phényl)phosphite]
- 0,13 parties en poids d'agent anti-acide (hydrotalcite enrobée d'acide stéarique).

A la sortie de l'extrudeuse le produit a été granulé.

Les granules de polyéthylène greffé à l'anhydride maléique présentaient les caractéristiques suivantes :
- MI5 = 1,6 g/10 min,
- TG = 0,8 partie en poids
- PI = 32 minutes.

### b) Traitement à la vapeur d'eau

250 g des granules obtenus en (a) ont été introduits dans un récipient fermé d'1 l contenant 0,3 l d'eau à ébullition. Après respectivement 30 minutes, 60 minutes et 120 minutes, les granules ont été séparés de l'eau et séchés sous vide à 80 °C pendant 1 heure. Les granules ainsi traités présentaient respectivement la caractéristique suivante :

| N° exemple | Durée | MI5 |
|---|---|---|
| 11 | 30 min | 0,58 |
| 12 | 60 min | 0,46 |
| 13 | 120 min | 0,51 |

### c) Exposition à l'humidité

Les granules ont ensuite été exposés à une atmosphère comprenant 53 % d'humidité relative pendant une période de 40 jours et à 22 °C. A l'issue de cette exposition, l'indice de fluidité est resté inchangé.

### Exemple 14 (de comparaison)

On a répété les opérations des exemples 11 à 13 à l'exception du traitement à la vapeur d'eau qui a été omis.

Au cours de l'exposition à l'humidité (respectivement après 1, 2, 4, 6, 10, 20 et 40 jours), l'indice de fluidité a évolué de la manière suivante :

| | 1 j. | 2 j. | 4 j. | 6 j. | 10 j. | 20 j. | 40 j. |
|---|---|---|---|---|---|---|---|
| MI5 | 1,4 | 1,4 | 1,3 | 1,1 | 1,0 | 1,1 | 0,9 |

La comparaison des résultats de l'exemple 14 avec ceux obtenus dans les exemples 11 à 13 fait apparaître le progrès apporté par l'invention pour ce qui concerne l'évolution de l'indice de fluidité. En effet, dans les exemples 11 à 13, l'indice de fluidité du polyéthylène greffé après le traitement à la vapeur d'eau reste inchangé tandis que, dans l'exemple 14, l'indice de fluidité évolue au cours du temps .

## Revendications

1. Procédé continu de greffage d'une polyoléfine au sein d'une masse fondue comprenant une polyoléfine d'oléfine linéaire contenant de 2 à 8 atomes de carbone, un monomère fonctionnel greffable et un générateur de radicaux, dans une extrudeuse comprenant à sa sortie une zone de compression précédant une zone d'évacuation, caractérisé en ce qu'on introduit au moins un additif anti-oxydant, à l'exception d'un additif anti-oxydant en solution dans l'hexane, dans une étape d'alimentation différée et distincte, au moment où le monomère fonctionnel greffable et le générateur de radicaux sont déjà introduits et présents au sein de la masse fondue et au plus tard avant l'entrée de celle-ci dans la zone de compression de l'extrudeuse.

2. Procédé selon la revendication 1, caractérisé en ce que l'extrudeuse est choisie parmi les extrudeuses du type co-malaxeur et les extrudeuses du type bi-vis corotatives interpénétrées.

3. Procédé selon la revendication 1 ou 2, caractérisé en ce que la polyoléfine est additionnée d'un agent préstabilisant en une quantité de 0,01 à 0,5 partie en poids pour 100 parties en poids de polyoléfine avant ou au moment de l'introduction de la polyoléfine dans l'extrudeuse et avant l'introduction de l'additif anti-oxydant dans l'extrudeuse.

4. Procédé selon l'une quelconque des revendications 1 à 3, caractérisé en ce qu'une première partie de la polyoléfine est introduite dans une trémie d'alimentation principale à l'entrée de l'extrudeuse et qu'une seconde partie de la polyoléfine est introduite simultanément avec l'additif anti-oxydant.

5. Procédé selon l'une quelconque des revendications 1 à 4, caractérisé en ce qu'il est effectué à une température de 140 à 250 °C.

6. Procédé selon l'une quelconque des revendications 1 à 5, caractérisé en ce que la polyoléfine est choisie parmi le polyéthylène, le polypropylène, les copolymères de l'éthylène, les copolymères du propylène et leurs mélanges.

7. Procédé selon la revendication 6, caractérisé en ce que la polyoléfine est le polyéthylène.

8. Procédé selon l'une quelconque des revendications 1 à 7, caractérisé en ce que le monomère fonctionnel greffable est choisi parmi les composés comprenant une insaturation vinylique et éventuellement un ou plusieurs noyaux aromatiques et/ou un ou plusieurs groupements carbonyle.

9. Procédé selon la revendication 8, caractérisé en ce que le monomère fonctionnel greffable est choisi parmi l'anhydride maléique, le styrène, le divinylbenzène et leurs mélanges.

10. Procédé selon la revendication 9, caractérisé en ce que le monomère fonctionnel greffable est l'anhydride maléique.

11. Procédé selon l'une quelconque des revendications 1 à 10, caractérisé en ce que le générateur de radicaux est un peroxyde organique présentant une demi-vie d'au moins 1 minute à 170 °C.

12. Procédé selon la revendication 11, caractérisé en ce que le générateur de radicaux est choisi parmi le α-α'-bis(t-butylperoxy isopropyl)benzène et le 2,5-diméthyl-2,5-di-t-butylperoxyhexane.

13. Procédé selon l'une quelconque des revendications 1 à 12, caractérisé en ce que l'additif anti-oxydant est choisi parmi les composés comprenant un groupement phénol stériquement encombré et parmi les composés phosphorés.

14. Procédé selon la revendication 13, caractérisé en ce que l'additif anti-oxydant est choisi parmi le pentaérythrityl tétrakis (3,5-di-t-butyl-4-hydroxyphényl propionate) et le tris(2,4-di-t-butyl-phényl)phosphite et leurs mélanges.

15. Procédé selon l'une quelconque des revendications 1 à 14, caractérisé en ce qu'on met en oeuvre le monomère fonctionnel greffable en une quantité de 0,01 à 10 parties en poids pour 100 parties en poids de polyoléfine.

16. Procédé selon l'une quelconque des revendications 1 à 15, caractérisé en ce qu'on met en oeuvre le générateur de radicaux en une quantité de 0,005 à 1 partie en poids pour 100 parties en poids de polyoléfine.

17. Procédé selon l'une quelconque des revendications 1 à 16, caractérisé en ce qu'on met en oeuvre l'additif anti-oxydant en une quantité totale de 0,01 à 10 parties en poids pour 100 parties en poids de polyoléfine.

18. Polyoléfine greffée stabilisée obtenue au moyen du procédé conforme à l'une quelconque des revendications 1 à 17, caractérisée en ce qu'elle est obtenue à partir de polyéthylène et en ce qu'elle présente une masse volumique standard (mesurée selon la norme ISO 1183 - 1987) de 930 à 960 kg/m³, un indice de fluidité (mesuré selon la norme ISO 1133 - 1991 sous une charge de 5 kg et à 190 °C) de 0,05 à 20 g/10 min, une teneur en monomère fonctionnel greffé de 0,01 à 10 parties en poids pour 100 parties en poids de polyéthylène et une teneur totale en additif anti-oxydant de 0,05 à 10 parties en poids pour 100 parties en poids de polyéthylène.

19. Polyéthylène greffé stabilisé obtenu au moyen du procédé conforme à l'une quelconque des revendications 1 à 17, présentant une masse volumique standard (mesurée selon la norme ISO 1183 - 1987) de 930 à 960 kg/m³, un indice de fluidité (mesuré selon la norme ISO 1133 - 1991 sous une charge de 5 kg et à 190 °C) de 0,05 à 20 g/10 min, une teneur en monomère fonctionnel greffable de 0,01 à 10 parties en poids pour 100 parties en poids de polyéthylène et une teneur totale en additif anti-oxydant de 0,05 à 10 parties en poids pour 100 parties en poids de polyéthylène.

20. Procédé selon l'une quelconque des revendications 1 à 17, caractérisé en ce que l'extrudeuse comprend, à l'entrée, une zone d'alimentation dans laquelle la polyoléfine, le monomère fonctionnel greffable et le générateur de radicaux sont introduits au moins partiellement, à sa sortie, une zone d'évacuation, et, entre la zone d'évacuation et l'endroit situé à mi-chemin de l'extrudeuse, un ou plusieurs éléments de malaxage suivis d'un ou plusieurs éléments de transport à pas gauche.

21. Procédé selon la revendication 20, caractérisé en ce que l'extrudeuse comporte en outre une zone de fusion située immédiatement après la zone d'alimentation, et une zone de compression précédant la zone d'évacuation.

22. Procédé selon la revendication 21, caractérisé en ce que la zone de fusion est constituée d'éléments de malaxage, et la zone de compression d'éléments de transport à pas droit.

23. Procédé selon la revendication 21 ou 22, caractérisé en ce que l'extrudeuse comporte en plus une zone de réaction supplémentaire disposée immédiatement après la zone de fusion, et une zone de dégazage située après la zone de réaction et avant la zone de compression.

24. Procédé selon la revendication 23, caractérisé en ce que la zone de réaction supplémentaire est composée d'éléments de transport à pas droit et d'éléments de malaxage, et la zone de dégazage d'éléments de transport à pas droit.

25. Procédé selon la revendication 24, caractérisé en ce que, dans la zone de réaction supplémentaire, la longueur totale des éléments de malaxage ne dépasse pas 20 % de la longueur totale des éléments de transport à pas droit.

26. Procédé selon la revendication 20, caractérisé en ce que la séquence d'un ou plusieurs éléments de malaxage suivis d'un ou plusieurs éléments de transport à pas gauche est disposée entre l'endroit où l'additif anti-oxydant est introduit et la zone d'évacuation.

27. Procédé de traitement de granules d'une polyoléfine greffée comprenant un additif anti-oxydant, ladite polyoléfine greffée étant préparée dans une extrudeuse comprenant, à sa sortie, une zone de compression précédant une zone d'évacuation, et au moins une partie dudit additif anti-oxydant est introduit dans la masse fondue au plus tard avant l'entrée de celle-ci dans la zone de compression de l'extrudeuse, conformément à l'une quelconque des revendications 1 à 17, selon lequel on met les granules de polyoléfine greffée en contact avec un milieu gazeux contenant de la vapeur d'eau.

28. Procédé selon la revendication 27, caractérisé en ce que l'extrudeuse comprend, à l'entrée, une zone d'alimentation dans laquelle la polyoléfine, le monomère fonctionnel greffable et le générateur de radicaux sont introduits au moins partiellement, à sa sortie, une zone d'évacuation, et, entre la zone d'évacuation et l'endroit situé à mi-chemin de l'extrudeuse, un ou plusieurs éléments de malaxage suivis d'un ou plusieurs éléments de transport à pas gauche, conformément à l'une quelconque des revendications 20 à 25.

29. Procédé selon la revendication 27 ou 28, caractérisé en ce que la pression partielle de la vapeur d'eau dans le milieu gazeux est d'au moins 0,01 et d'au plus 1 MPa.

30. Procédé selon l'une quelconque des revendications 27 à 29, caractérisé en ce que la mise en contact des granules avec un milieu gazeux contenant de la vapeur d'eau est effectuée à une température d'au moins 80 et d'au plus 200 °C.

31. Procédé selon l'une quelconque des revendications 27 à 30, caractérisé en ce que le monomère fonctionnel greffable est choisi parmi les anhydrides insaturés d'acide mono- ou dicarboxylique.

32. Granules de polyoléfine greffée comprenant un additif anti-oxydant et présentant un indice de fluidité de stabilité d'au moins 0,90 définie par le rapport entre, d'une part, l'indice de fluidité mesuré après stockage des granules pendant 48 heures à température ambiante, à pression atmosphérique et dans un milieu gazeux saturé en vapeur d'eau, et, d'autre part, l'indice de fluidité mesuré immédiatement après la fabrication des granules (la fabrication comprenant tout traitement ultérieur succédant la granulation) et avant stockage.

33. Granules selon la revendication 32, caractérisés en ce qu'ils sont obtenus à partir de polyéthylène et en ce qu'ils présentent une masse volumique standard (mesurée selon la norme ISO 1183 - 1987) de 930 à 960 kg/m³, un indice de fluidité (mesuré selon la norme ISO 1133 - 1991 sous une charge de 5 kg et à 190 °C) de 0,05 à 20 g/10 min, une teneur en monomère fonctionnel greffé de 0,01 à 10 parties en poids pour 100 parties en poids de polyéthylène.

34. Granules selon la revendication 32 ou 33, caractérisés en ce qu'ils sont obtenus par le procédé conforme à l'une quelconque des revendications 27 à 31.

## Claims

1. Continuous process for grafting a polyolefin within a melt including a polyolefin of linear olefin containing from 2 to 8 carbon atoms, a graftable functional monomer and a radical generator, in an extruder including, at its exit, a compression zone preceding a discharge zone, characterized in that at least one antioxidant additive, except for an antioxidant additive dissolved in hexane, is introduced in a delayed and separate feed step, at the moment at which the graftable functional monomer and the radical generator have already been introduced into and are present in the melt and not later than before the latter enters the compression zone of the extruder.

2. Process according to Claim 1, characterized in that the extruder is chosen from extruders of the co-blender type and extruders of the interpenetrating corotative twin-screw type.

3. Process according to Claim 1 or 2, characterized in that a prestabilizing agent is added to the polyolefin in a quantity of 0.01 to 0.5 parts by weight per 100 parts by weight of polyolefin before or at the time of the introduction of the polyolefin into the extruder and before the introduction of the antioxidant additive into the extruder.

4. Process according to any one of Claims 1 to 3, characterized in that a first portion of the polyolefin is introduced into a main feed hopper at the entry of the extruder and in that a second portion of the polyolefin is introduced simultaneously with the antioxidant additive.

5. Process according to any one of Claims 1 to 4, characterized in that it is carried out at a temperature of 140 to 250°C.

6. Process according to any one of Claims 1 to 5, characterized in that the polyolefin is chosen from polyethylene, polypropylene, ethylene copolymers, propylene copolymers and mixtures thereof.

7. Process according to Claim 6, characterized in that the polyolefin is polyethylene.

8. Process according to any one of Claims 1 to 7, characterized in that the graftable functional monomer is chosen from compounds containing a vinyl unsaturation and optionally one or several aromatic nuclei and/or one or several carbonyl groups.

9. Process according to Claim 8, characterized in that the graftable functional monomer is chosen from maleic anhydride, styrene, divinylbenzene and mixtures thereof.

10. Process according to Claim 9, characterized in that the graftable functional monomer is maleic anhydride.

11. Process according to any one of Claims 1 to 10, characterized in that the radical generator is an organic peroxide which has a half-life of at least 1 minute at 170°C.

12. Process according to Claim 11, characterized in that the radical generator is chosen from α,α'-bis(t-butylperoxyisopropyl)benzene and 2,5-dimethyl-2,5-di-t-butylperoxyhexane.

13. Process according to any one of Claims 1 to 12, characterized in that the antioxidant additive is chosen from compounds containing a sterically hindered phenol group and from phosphorus compounds.

14. Process according to Claim 13, characterized in that the antioxidant additive is chosen from pentaerythrityl tetrakis(3,5-di-t-butyl-4-hydroxyphenyl propionate and tris(2,4-di-t-butylphenyl) phosphite and mixtures thereof.

15. Process according to any one of Claims 1 to 14, characterized in that the graftable functional monomer is used in a quantity of 0.01 to 10 parts by weight per 100 parts by weight of polyolefin.

16. Process according to any one of Claims 1 to 15, characterized in that the radical generator is used in a quantity of 0.005 to 1 part by weight per 100 parts by weight of polyolefin.

17. Process according to any one of Claims 1 to 16, characterized in that the antioxidant additive is used in a total quantity of 0.01 to 10 parts by weight per 100 parts by weight of polyolefin.

18. Stabilized grafted polyolefin obtained by means of the process in accordance with any one of Claims 1 to 17, characterized in that it is obtained from polyethylene and in that it has a standard density (measured according to ISO standard 1183-1987) of 930 to 960 kg/m³, a melt index (measured according to ISO standard 1133-1991 under a 5 kg load and at 190°C) of 0.05 to 20 g/10 min, a grafted functional monomer content of 0.01 to 10 parts by weight per 100 parts by weight of polyethylene and a total antioxidant additive content of 0.05 to 10 parts by weight per 100 parts by weight of polyethylene.

19. Stabilized grafted polyethylene obtained by means of the process in accordance with any one of Claims 1 to 17, exhibiting a standard density (measured according to ISO standard 1183-1987) of 930 to 960 kg/m³, a melt index (measured according to ISO standard 1133-1991 under a 5 kg load and at 190°C) of 0.05 to 20 g/10 min, a graftable functional monomer content of 0.01 to 10 parts by weight per 100 parts by weight of polyethylene and a total antioxidant additive content of 0.05 to 10 parts by weight per 100 parts by weight of polyethylene.

20. Process according to any one of Claims 1 to 17, characterized in that the extruder includes, at the entry, a feed zone into which the polyolefin, the graftable functional monomer and the radical generator are introduced at least partially, at its exit a discharge zone and, between the discharge zone and the spot situated midway along the extruder, one or several blending members followed by one or several lefthanded conveying members.

21. Process according to Claim 20, characterized in that the extruder additionally comprises a melting zone situated immediately after the feed zone, and a compression zone preceding the discharge zone.

22. Process according to Claim 21, characterized in that the melting zone consists of blending members, and the compression zone of righthanded conveying members.

23. Process according to Claim 21 or 22, characterized in that the extruder additionally comprises an additional reaction zone arranged immediately after the melting zone, and a degassing zone situated after the reaction zone and before the compression zone.

24. Process according to Claim 23, characterized in that the additional reaction zone is made up of righthanded conveying members and of blending members, and the degassing zone of righthanded conveying members.

25. Process according to Claim 24, characterized in that, in the additional reaction zone, the total length of the blending members does not exceed 20 % of the total length of the righthanded conveying members.

26. Process according to Claim 20, characterized in that the sequence of one or several blending members which are followed by one or several lefthanded conveying members is arranged between the place where the antioxidant additive is introduced and the discharge zone.

27. Process of treating granules of a grafted polyolefin comprising an antioxidant additive, the said grafted polyolefin being prepared in an extruder including, at its exit, a compression zone preceding a discharge zone, and at least some of the said antioxidant additive is introduced into the melt not later than before the latter enters the compression zone of the extruder, in accordance with any one of Claims 1 to 17, according to which process the grafted polyolefin granules are placed in contact with a gaseous medium containing water vapour.

28. Process according to Claim 27, characterized in that the extruder includes, at the entry, a feed zone into which the polyolefin, the graftable functional monomer and the radical generator are introduced at least partially, a discharge zone at its exit and, between the discharge zone and the spot situated midway along the extruder, one or several blending members followed by one or several lefthanded conveying members, in accordance with any one of Claims 20 to 25.

29. Process according to Claim 27 or 28, characterized in that the partial pressure of water vapour in the gaseous medium is at least 0.01 and not more than 1 MPa.

30. Process according to any one of Claims 27 to 29, characterized in that bringing the granules into contact with a gaseous medium containing water vapour is performed at a temperature of at least 80 and not more than 200°C.

31. Process according to any one of Claims 27 to 30, characterized in that the graftable functional monomer is chosen from unsaturated anhydrides of a mono- or dicarboxylic acid.

32. Granules of grafted polyolefin comprising an antioxidant additive and exhibiting a melt index of stability of at least 0.90, defined as the ratio of, on the one hand, the melt index measured after storage of the granules for 48 hours at ambient temperature, at atmospheric pressure and in a gaseous medium saturated with water vapour, to, on the other hand, the melt index measured immediately after the manufacture of the granules (the manufacture including any subsequent treatment following the granulation) and before storage.

33. Granules according to Claim 32, characterized in that they are obtained from polyethylene and in that they exhibit a standard density (measured according to ISO standard 1183-1987) of 930 to 960 kg/m³, a melt index (measured according to ISO standard 1133-1991 under a 5 kg load and at 190°C) of 0.05 to 20 g/10 min and a grafted functional monomer content of 0.01 to 10 parts by weight per 100 parts by weight of polyethylene.

34. Granules according to Claim 32 or 33, characterized in that they are obtained by the process in accordance with any one of Claims 27 to 31.

## Patentansprüche

1. Kontinuierliches Verfahren zur Pfropfung eines Polyolefins innerhalb einer geschmolzenen Masse, die ein Polyolefin aus linearem Olefin, das 2 bis 8 Kohlenstoffatome enthält, ein pfropfbares funktionelles Monomer und einen Radikalerzeuger umfaßt, in einem Extruder, der an seinem Ausgang eine Kompressionszone, die einer Entleerungszone vorangeht, umfaßt, dadurch gekennzeichnet, daß man wenigstens einen Antioxidationszusatz, mit Ausnahme eines in Hexan gelösten Antioxidationszusatzes, in einem zeitlich versetzten und unterschiedlichen Einspeisungsschritt zu dem Zeitpunkt, wo das pfropfbare funktionelle Monomer und der Radikalerzeuger bereits eingeführt und innerhalb der geschmolzenen Masse vorhanden sind, und spätestens vor deren Eintritt in die Kompressionszone des Extruders einführt.

2. Verfahren gemäß Anspruch 1, dadurch gekennzeichnet, daß der Extruder unter den Extrudern vom Typ Co-Kneter und den Extrudern vom Typ ineinandergreifender gleichläufig drehender Doppelschnecken ausgewählt ist.

3. Verfahren gemäß Anspruch 1 oder 2, dadurch gekennzeichnet, daß dem Polyolefin ein Vorstabilisierungsmittel in einer Menge von 0,01 bis 0,5 Gewichtsteil pro 100 Gewichtsteile Polyolefin vor oder zum Zeitpunkt der Einführung des Polyolefins in den Extruder und vor der Einführung des Antioxidationszusatzes in den Extruder zugesetzt wird.

4. Verfahren gemäß einem der Ansprüche 1 bis 3, dadurch gekennzeichnet, daß ein erster Teil des Polyolefins in einen Haupteinspeisungstrichter am Eingang des Extruders eingeführt wird und daß ein zweiter Teil des Polyolefins gleichzeitig mit dem Antioxidationszusatz eingeführt wird.

5. Verfahren gemäß einem der Ansprüche 1 bis 4, dadurch gekennzeichnet, daß es bei einer Temperatur von 140 bis 250 °C ausgeführt wird.

6. Verfahren gemäß einem der Ansprüche 1 bis 5, dadurch gekennzeichnet, daß das Polyolefin unter Polyethylen, Polypropylen, den Ethylencopolymeren, den Propylencopolymeren und deren Gemischen ausgewählt ist.

7. Verfahren gemäß Anspruch 6, dadurch gekennzeichnet, daß das Polyolefin Polyethylen ist.

8. Verfahren gemäß einem der Ansprüche 1 bis 7, dadurch gekennzeichnet, daß das pfropfbare funktionelle Monomer unter den Verbindungen ausgewählt ist, die vinylisch ungesättigt sind und gegebenenfalls einen oder mehrere aromatische Kerne und/oder eine oder mehrere Carbonylgruppen umfassen.

9. Verfahren gemäß Anspruch 8, dadurch gekennzeichnet, daß das pfropfbare funktionelle Monomer unter Maleinsäureanhydrid, Styrol, Divinylbenzol und deren Gemischen ausgewählt ist.

10. Verfahren gemäß Anspruch 9, dadurch gekennzeichnet, daß das pfropfbare funktionelle Monomer Maleinsäureanhydrid ist.

11. Verfahren gemäß einem der Ansprüche 1 bis 10, dadurch gekennzeichnet, daß der Radikalerzeuger ein organisches Peroxid ist, das bei 170 °C eine Halbwertszeit von wenigstens 1 Minute aufweist.

12. Verfahren gemäß Anspruch 11, dadurch gekennzeichnet, daß der Radikalerzeuger unter α,α'-Bis(t-butylperoxyisopropyl)benzol und 2,5-Dimethyl-2,5-di-t-butylperoxyhexan ausgewählt ist.

13. Verfahren gemäß einem der Ansprüche 1 bis 12, dadurch gekennzeichnet, daß der Antioxidationszusatz unter den Verbindungen, die eine sterisch gehinderte Phenolgruppe umfassen, und unter den phosphorhaltigen Verbindungen ausgewählt ist.

14. Verfahren gemäß Anspruch 13, dadurch gekennzeichnet, daß der Antioxidationszusatz unter Pentaerythrityl-tetrakis(3,5-di-t-butyl-4-hydroxyphenylpropionat) und Tris(2,4-di-t-butyl-phenyl)phosphit und deren Gemischen ausgewählt ist.

15. Verfahren gemäß einem der Ansprüche 1 bis 14, dadurch gekennzeichnet, daß man das pfropfbare funktionelle Monomer in einer Menge von 0,01 bis 10 Gewichtsteile pro 100 Gewichtsteile Polyolefin einsetzt.

16. Verfahren gemäß einem der Ansprüche 1 bis 15, dadurch gekennzeichnet, daß man den Radikalerzeuger in einer Menge von 0,005 bis 1 Gewichtsteil pro 100 Gewichtsteile Polyolefin einsetzt.

17. Verfahren gemäß einem der Ansprüche 1 bis 16, dadurch gekennzeichnet, daß man den Antioxidationszusatz in einer Gesamtmenge von 0,01 bis 10 Gewichtsteile pro 100 Gewichtsteile Polyolefin einsetzt.

18. Stabilisiertes Pfropfpolyolefin, das mittels des Verfahrens gemäß einem der Ansprüche 1 bis 17 erhalten wird, dadurch gekennzeichnet, daß es aus Polyethylen erhalten wird, und dadurch, daß es eine volumenbezogene Standardmasse (gemessen gemäß der Norm ISO 1183 - 1987) von 930 bis 960 kg/m³, einen Fließindex (gemessen gemäß der Norm ISO 1133 - 1991 unter einer Last von 5 kg und bei 190 °C) von 0,05 bis 20 g/10 min, einen Gehalt an gepfropftem funktionellem Monomer von 0,01 bis 10 Gewichtsteile pro 100 Gewichtsteile Polyethylen und einen Gesamtgehalt an Antioxidationszusatz von 0,05 bis 10 Gewichtsteile pro 100 Gewichtsteile Polyethylen aufweist.

19. Stabilisiertes Pfropfpolyolefin, das mittels des Verfahrens gemäß einem der Ansprüche 1 bis 17 erhalten wird, das eine volumenbezogene Standardmasse (gemessen gemäß der Norm ISO 1183 - 1987) von 930 bis 960 kg/m³, einen Fließindex (gemessen gemäß der Norm ISO 1133 - 1991 unter einer Last von 5 kg und bei 190 °C) von 0,05 bis 20 g/10 min, einen Gehalt an pfropfbarem funktionellem Monomer von 0,01 bis 10 Gewichtsteile pro 100 Gewichtsteile Polyethylen und einen Gesamtgehalt an Antioxidationszusatz von 0,05 bis 10 Gewichtsteile pro 100 Gewichtsteile Polyethylen aufweist.

20. Verfahren gemäß einem der Ansprüche 1 bis 17, dadurch gekennzeichnet, daß der Extruder am Eingang eine Einspeisungszone, in die das Polyolefin, das pfropfbare funktionelle Monomer und der Radikalerzeuger wenigstens teilweise eingeführt werden, an seinem Ausgang eine Entleerungszone und zwischen der Entleerungszone und dem auf halber Strecke des Extruders gelegenen Ort ein oder mehrere Knetelemente, denen ein oder mehrere linksgängige Transportelemente folgen, umfaßt.

21. Verfahren gemäß Anspruch 20, dadurch gekennzeichnet, daß der Extruder außerdem eine Schmelzzone, die direkt nach der Einspeisungszone liegt, und eine Kompressionszone, die der Entleerungszone vorangeht, umfaßt.

22. Verfahren gemäß Anspruch 21, dadurch gekennzeichnet, daß die Schmelzzone aus Knetelementen und die Kompressionszone aus rechtsgängigen Transportelementen besteht.

23. Verfahren gemäß Anspruch 21 oder 22, dadurch gekennzeichnet, daß der Extruder außerdem eine zusätzliche Reaktionszone, die direkt nach der Schmelzzone angeordnet ist, und eine Entgasungszone, die nach der Reaktionszone und vor der Kompressionszone liegt, umfaßt.

24. Verfahren gemäß Anspruch 23, dadurch gekennzeichnet, daß die zusätzliche Reaktionszone aus rechtsgängigen Transportelementen und aus Knetelementen und die Entgasungszone aus rechtsgängigen Transportelementen zusammengesetzt ist.

25. Verfahren gemäß Anspruch 24, dadurch gekennzeichnet, daß in der zusätzlichen Reaktionszone die Gesamtlänge der Knetelemente 20% der Gesamtlänge der rechtsgängigen Transportelemente nicht übersteigt.

26. Verfahren gemäß Anspruch 20, dadurch gekennzeichnet, daß die Abfolge von einem oder mehreren Knetelementen, denen ein oder mehrere linksgängige Transportelemente folgen. zwischen dem Ort, wo der Antioxidationszusatz eingeführt wird, und der Entleerungszone angeordnet ist.

27. Verfahren zur Behandlung von Granulat aus einem Pfropfpolyolefin, das einen Antioxidationszusatz umfaßt, wobei besagtes Pfropfpolyolefin in einem Extruder hergestellt wird, der an seinem Ausgang eine Kompressionszone, die einer Entleerungszone vorangeht, umfaßt und wenigstens ein Teil besagten Antioxidationszusatzes in die geschmolzene Masse spätestens vor deren Eintritt in die Kompressionszone des Extruders eingeführt wird entsprechend einem der Ansprüche 1 bis 17, gemäß dem man das Granulat aus Pfropfpolyolefin mit einem gasförmigen Medium, das Wasserdampf enthält, in Kontakt bringt.

28. Verfahren gemäß Anspruch 27, dadurch gekennzeichnet, daß der Extruder am Eingang eine Einspeisungszone, in die das Polyolefin, das pfropfbare funktionelle Monomer und der Radikalerzeuger wenigstens teilweise eingeführt werden, an seinem Ausgang eine Entleerungszone und zwischen der Entleerungszone und dem auf halber Strecke des Extruders gelegenen Ort ein oder mehrere Knetelemente, denen ein oder mehrere linksgängige Transportelemente folgen, gemäß einem der Ansprüche 20 bis 25 umfaßt.

29. Verfahren gemäß Anspruch 27 oder 28, dadurch gekennzeichnet, daß der Partialdruck des Wasserdampfs in dem gasförmigen Medium wenigstens 0,01 und höchstens 1 MPa beträgt.

30. Verfahren gemäß einem der Ansprüche 27 bis 29, dadurch gekennzeichnet, daß das Inkontaktbringen des Granulats mit einem gasförmigen Medium, das Wasserdampf enthält, bei einer Temperatur von wenigstens 80 und höchstens 200 °C ausgeführt wird.

31. Verfahren gemäß einem der Ansprüche 27 bis 30, dadurch gekennzeichnet, daß das pfropfbare funktionelle Monomer unter den ungesättigten Anhydriden einer Mono- oder Dicarbonsäure ausgewählt ist.

32. Granulat aus Pfropfpolyolefin, das einen Antioxidationszusatz umfaßt und das einen Stabilitätsfließindex von wenigstens 0,90 aufweist, der definiert ist durch das Verhältnis zwischen einerseits dem Fließindex, der nach Lagerung des Granulats während 48 Stunden bei Raumtemperatur bei Atmosphärendruck und in einem mit Wasserdampf gesättigten gasförmigen Medium gemessen wird, und andererseits dem Fließindex, der sofort nach der Herstellung des Granulats (wobei die Herstellung jede spätere Behandlung, die der Granulierung folgt, umfaßt) und vor Lagerung gemessen wird.

33. Granulat gemäß Anspruch 32, dadurch gekennzeichnet, daß es aus Polyethylen erhalten wird, und dadurch, daß es eine volumenbezogene Standardmasse (gemessen gemäß der Norm ISO 1183 - 1987) von 930 bis 960 kg/m³, einen Fließindex (gemessen gemäß der Norm ISO 1133 - 1991 unter einer Last von 5 kg und bei 190 °C) von 0,05 bis 20 g/10 min, einen Gehalt an gepfropftem funktionellem Monomer von 0,01 bis 10 Gewichtsteile pro 100 Gewichtsteile Polyethylen aufweist.

34. Granulat gemäß Anspruch 32 oder 33, dadurch gekennzeichnet, daß es durch das Verfahren gemäß einem der Ansprüche 27 bis 31 erhalten wird.
